# EUROPEAN PATENT SPECIFICATION

(11) **EP 0 548 750 B1**
(45) Date of publication and mention of the grant of the patent: **08.11.1995**
(21) Application number: 92121306.2
(22) Date of filing: 15.12.1992
(51) Int. Cl.: B60K 15/00, B29C 65/34, F16L 13/08

(54) **Motor vehicle fuel tank and a process for its construction**
Kraftstoffbehälter eines Fahrzeuges und Verfahren zu seiner Herstellung
Réservoir de combustible pour voitures et procédé pour sa fabrication

(30) Priority: 24.12.1991 IT TO911040
(43) Date of publication of application: 30.06.1993
(73) Proprietor: FIAT AUTO S.p.A., 10135 Torino (IT)
(72) Inventor: Da Re', Mario, I-10100 Torino (IT)
(74) Representative: Lotti, Giorgio

(56) References cited:
- EP-A- 0 064 310
- EP-A- 0 115 623
- EP-A- 0 227 525
- DE-A- 2 641 397
- DE-A- 2 913 609
- FR-A- 2 522 389
- US-A- 3 193 129

## Description

This invention relates to a motor vehicle fuel tank and a process for its construction.

Motor vehicle fuel tanks are currently formed from two half-shells of steel plate joined together by continuous electric welding along perimetral flanges, which are formed by bending the half-shell edges horizontally.

Although this method is effective it requires the provision of a welding plant which, besides being costly in itself, involves a considerable electric current consumption in melting the weld metals.

In addition, the current configuration of perimetral flanges on tank half-shells is such as to occupy a considerable space in plan view which cannot contribute to the containing capacity of the tank.

In the light of the increasing requirement to optimize internal vehicle space with a view to achieving more compact vehicles and improving their comfort, an object of the present invention is to provide a tank in which the perimetral outline of the joining edges of its component half-shells is smaller than that required in the known art, with a consequent greater space available to provide fuel containing capacity, for equal overall plan dimensions.

A further object of the invention is to provide an easily constructed tank which obviates the aforesaid drawbacks.

A further object of the invention is to propose a new and economically advantageous process for joining the half-shells together which does not require the use of traditional continuous electric welding plants.

A further object of the invention is to propose a process which can also be applied to tanks constructed partly or entirely of plastics material.

These and further objects and advantages, which will be more apparent hereinafter, are attained according to the invention by a motor vehicle fuel tank of the type consisting of two complementary half-shells joined together along their edges, characterised in that the two half-shells have their edges turned over in such a manner as to form perimetral channels or pockets with their concavities facing substantially opposite directions; the two half-shells being joined together by melting a bead arranged between the turned edges of the two half-shells; the bead (17) being of such physical characteristics as to adhere to said edges on being melted.

A preferred embodiment of the tank according to the invention and the process for forming it are described hereinafter with reference to the accompanying drawings, in which:
Figure 1 is a partial section in a vertical plane, through a tank according to the invention;
Figure 2 illustrates to an enlarged scale a detail of a component used in the process according to the invention; and
Figure 3 is a side view of the tank of Figure 1 to which the component of Figure 2 has been applied.

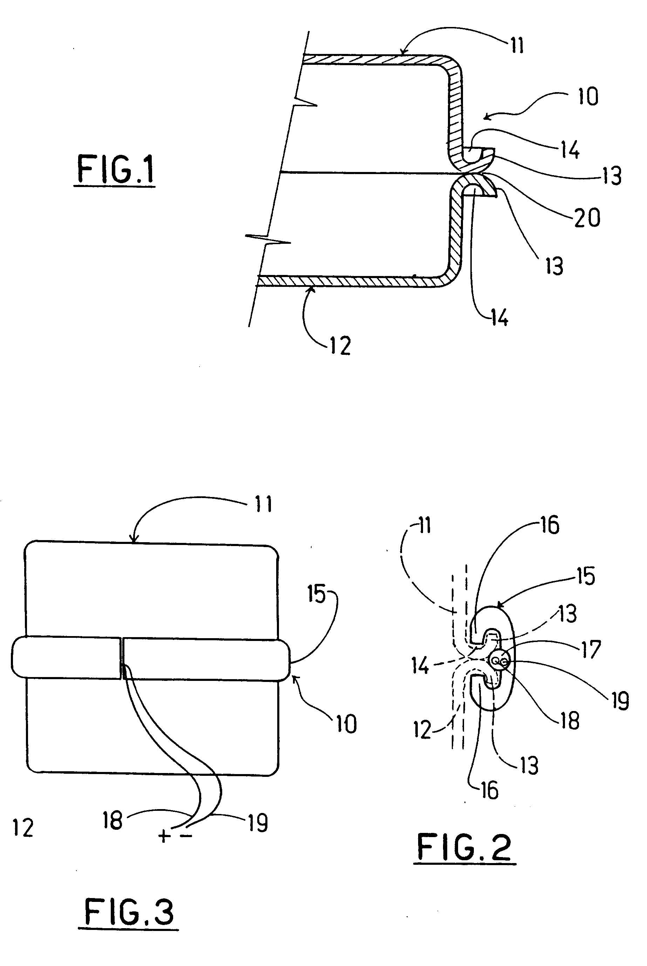

With reference to Figure 1, a tank according to the invention, indicated overall by 10, is formed from the combination of two complementary half-shells 11 and 12. These half-shells can be formed of steel plate by cold-pressing as in the traditional case, or can be constructed entirely or partly of plastics material.

Both the half-shells 11 and 12 have their edges 13 turned over outwards to define perimetral channels or pockets 14 with their cavities facing substantially opposite directions.

With reference to Figure 2, a gasket 15 of C cross-section is mounted over the turned edges 13 along the entire perimeter of the tank 10, so that it externally embraces the edges 13, and its thickened ends 16 occupy the channels 14.

The gasket 15 consists advantageously of a polyurethane elastomer (such as adiprene, elastopal or vulkollan), and carries in its central part a bead 17 of low-melting plastics material (such as polyethylene or polypropylene) in which two electric cables 18 and 19 forming a closed electrical circuit are embedded.

As can be seen from Figure 2, the bead 17 projects from the body of the gasket 15 so that when this latter is fitted over the half-shells 11 and 12, the bead faces the interspace 20 present between the edges of the two half-shells 11 and 12.

The process for joining the two half-shells is as follows.

When the upper half-shell 11 has been positioned on the lower half-shell 12, the gasket 15 is fitted over the facing perimetral edges 13.

The electric cables 18 and 19 of the bead 17 are then connected to a source of electrical energy (not shown for simplicity) to hence close the circuit and cause the low-melting plastics material forming the bead 17 to melt. The cables 18 and 19 are then cut.

The molten material mechanically joins the edges 13 together without any interruption along the entire perimeter of the tank 10, so ensuring its hydraulic seal.

As stated in the introduction, the present process has the advantage, compared with traditional methods using a welding plant, of requiring a much less powerful electric current source, as the melting points of polyethylene and polypropylene are much lower than those of the solder or other metals usually used in welding.

Although only one embodiment of the tank and a process for its construction have been described and illustrated on the drawings, the invention is not limited to this particular embodiment, and modifications can be made thereto by an expert of the art to form various embodiments, without leaving the scope of the invention and its range of protection as defined by the following claims.

## Claims

1. A motor vehicle fuel tank of the type consisting of two complementary half-shells joined together along their edges, characterised in that the two half-shells (11, 12) have their edges (13) turned over in such a manner as to form perimetral channels or pockets (14) with their concavities facing substantially opposite directions; the joint between the two half-shells (11, 12) being formed by melting a bead (17) lodged between the turned edges (13) of the two half-shells; the bead (17) being of such physical characteristics as to adhere to said edges on being melted.

2. A tank as claimed in claim 1, characterised in that the bead (17) is of low-melting plastics material.

3. A tank as claimed in claims 1 and 2, characterised in that embedded within the bead (17) are two electric cables (18, 19) which are closed to form a loop and are connected to an electrical source in order to melt the bead (17).

4. A tank as claimed in claim 1, characterised in that the bead (17) is housed in a gasket (15) of substantially C cross-section fitted over the turned edges (13) of the half-shells (11, 12), with its thickened ends (16) inserted into said channels or pockets (14) so that it hooks onto the turned edges (13).

5. A process for joining together the edges of a motor vehicle fuel tank consisting of two contacting half-shells joined together along respective outwardly turned perimetral edges; the process being characterised by the following stages in succession:
- a bead of low-melting material (17) and an electrical resistor (18, 19) connected to an electrical supply source are extended along and between said edges;
- the resistor is traversed by current until said material (17) melts onto the edges (13) to rigidly join the two half-shells together;
- the electrical supply is disconnected from the electrical resistor.

## Patentansprüche

1. Kraftstoffbehälter eines Fahrzeugs derjenigen Art, die aus zwei komplementären Halbschalen besteht, die miteinander entlang ihrer Ränder verbunden sind, dadurch gekennzeichnet, daß die Ränder (13) der zwei Halbschalen (11, 12) derart umgeschlagen sind, daß umlaufende Kanäle oder Taschen (14) gebildet sind, deren Vertiefungen im wesentlichen in entgegengesetzte Richtungen weisen; wobei die Verbindung zwischen den zwei Halbschalen (11, 12) durch Schmelzen einer Wulst (17) gebildet wird, die zwischen den umgeschlagenen Rändern (13) der zwei Halbschalen angeordnet ist; wobei die Wulst (17) derartige physikalische Eigenschaften hat, daß sie an den Rändern anhaftet, wenn sie geschmolzen wird.

2. Behälter nach Anspruch 1, dadurch gekennzeichnet, daß die Wulst (17) aus einem niedrigschmelzenden Kunststoffmaterial besteht.

3. Behälter nach Anspruch 1 und 2, dadurch gekennzeichnet, daß innerhalb der Wulst (17) zwei elektrische Kabel (18, 19) eingebettet sind, die geschlossen sind, um eine Schleife zu bilden, und mit einer elektrischen Quelle verbunden sind, um die Wulst (17) zu schmelzen.

4. Behälter nach Anspruch 1, dadurch gekennzeichnet, daß die Wulst (17) in einer Dichtung (15) mit einem im wesentlichen C-förmigen Querschnitt untergebracht ist, die auf den umgeschlagenen Rändern (13) der Halbschalen (11, 12) aufgesetzt ist, wobei ihre verdickten Enden (16) in die Kanäle oder Taschen (14) eingeführt sind, so daß sie in die umgeschlagenen Ränder (13) einhakt.

5. Verfahren zum Verbinden der Ränder des Kraftstoffbehälters eines Fahrzeugs, der aus zwei kontaktierenden Halbschalen besteht, die längs entsprechender nach außen umgeschlagener umlaufender Ränder verbunden werden; wobei das Verfahren durch die folgenden aufeinanderfolgenden Stufen gekennzeichnet ist:
- eine Wulst aus niedrigschmelzendem Material (17) und ein mit einer elektrischen Versorgungsquelle verbundener elektrischer Widerstand (18, 19) werden längs und zwischen den Rändern angeordnet;
- der Widerstand wird von Strom durchflossen, bis das Material (17) auf den Rändern (13) schmilzt, um die zwei Halbschalen fest miteinander zu verbinden;
- die Elektroversorgung wird vom elektrischen Widerstand getrennt.

## Revendications

1. Réservoir de carburant pour véhicule à moteur du type constitué de deux demi-carters complémentaires joints le long de leurs bords;
réservoir caractérisé en ce que les deux demi-carters (11, 12) ont des bords (13) retournés de façon à former des canaux ou poches de périmètre (14), leurs concavités étant tournées dans des directions pratiquement opposées, le joint entre les deux demi-carters (11, 12) étant formé par fusion d'un cordon (17) logé entre les bords retournés (13) des deux demi-carters, le cordon (17) ayant des caractéristiques physiques telles qu'il adhère auxdits bords lors de la fusion.

2. Réservoir selon la revendication 1, caractérisé en ce que le cordon (17) est en une matière plastique à bas point de fusion.

3. Réservoir selon les revendications 1 et 2, caractérisé en ce que deux câbles électriques (18, 19) sont incorporés au cordon (17), câbles qui sont fermés pour former une boucle et qui sont raccordés à une source électrique afin de faire fondre le cordon (17).

4. Réservoir selon la revendication 1, caractérisé en ce que le cordon (17) est logé dans un joint (15) de section droite pratiquement en C placé sur les bords retournés (13) des demi-carters (11, 12), ses extrémités épaissies (16) étant insérées dans lesdits canaux ou poches (14) de façon à s'accrocher aux bords retournés (13).

5. Procédé de jonction des bords d'un réservoir de carburant pour véhicule à moteur constitué de deux demi-carters en contact joints le long de bords respectifs de périmètre retournés vers l'extérieur, procédé caractérisé par les étapes successives suivantes :
- un cordon de matériau à bas point de fusion (17) et une résistance électrique (18, 19), raccordée à une source d'alimentation électrique, s'étendent le long et entre lesdits bords;
- la résistance est parcourue par un courant jusqu'à ce que ledit matériau (17) fonde sur les bords (13) pour joindre, de façon rigide, les deux demi-carters; et
- l'alimentation électrique est déconnectée de la résistance électrique.
